# EUROPÄISCHE PATENTSCHRIFT

(11) **EP 1 364 695 B1**
(45) Veröffentlichungstag und Bekanntmachung des Hinweises auf die Patenterteilung: **27.09.2006**
(21) Anmeldenummer: 03011109.0
(22) Anmeldetag: 22.05.2003
(51) Int. Cl.: B01D 46/24, B01D 46/42

(54) **Filter mit einem Filtergehäuse**
Filter with a housing
Filtre avec un boitier

(30) Priorität: 23.05.2002 DE 10222800
(43) Veröffentlichungstag der Anmeldung: 26.11.2003
(73) Patentinhaber: Mann + Hummel GmbH, 71638 Ludwigsburg (DE)
(72) Erfinder: Kopec, Edvard, 67346 Speyer (DE); Winter, Manfred, 74229 Oedheim (DE); Greif, Volker Dr., 67376 Harthausen (DE); Dworatzek, Klemens, 68535 Edingen (DE); Hartmann, Marion, 68809 Neulussheim (DE); Muenkel, Karlheinz, 75038 Oberderdingen-Flehingen (DE); Haehn, Jens, 69120 Heidelberg (DE); Stinzendoerfer, Joachim, 67346 Speyer (DE)
(74) Vertreter: Voth, Gerhard

(56) Entgegenhaltungen:
- DE-A- 10 048 740
- FR-A- 2 161 503
- US-A- 4 537 608
- US-A- 5 277 157
- US-B1- 6 231 630

## Beschreibung

Die Erfindung betrifft einen Filter in einem Filtergehäuse nach dem Oberbegriff des Anspruches 1.

In der Druckschrift US 6 322 602 B2 wird ein Luftfilter beschrieben, der in einem zylindrischen Filtergehäuse ein axial zu durchströmendes Filterelement aufweist. Der Aufnahmeraum zur Aufnahme des Filters im Filtergehäuse ist an einer axialen Stirnseite im Bereich der Anströmseite des Filters von einem Gehäusedeckel zu verschließen, welcher zum Austausch des Filterelementes gelöst wird, woraufhin das Filterelement aus dem Aufnahmeraum axial herausgenommen und durch ein neues Filterelement ersetzt werden kann.

Diese Ausführung weist den Nachteil auf, dass zum Austausch des Filterelements der Gehäusedeckel im Anströmbereich entfernt werden muss, was zunächst eine Demontage des gesamten Filtergehäuses aus seiner Einbauposition voraussetzt, weil der Gehäusedeckel mit den Zuleitungen für die Zufuhr der zu reinigenden Luft verbunden ist. Ein Austausch des Filterelementes ist daher nur mit einem erheblichen Aufwand zu bewerkstelligen, wodurch die Wartungsdauer ansteigt und erhebliche Wartungskosten anfallen.

Aus der US 6,231,63D ist ein Luftfilter bekannt, bei dem ein Filterelement in einem Kippgehäuse angeordnet ist. Dieses Kippgehäuse ist in einem Strömungskanal angeordnet; der Strömungskanal wiederum wird mit einem Deckel verschlossen. Zum Austausch des Filterelementes ist es erforderlich, zunächst den Deckel zu öffnen, dann das Filterelement bzw. den Halterahmen des Filterelementes zu entriegeln und so zu kippen, dass das Element entnommen werden kann.

Der Erfindung liegt das Problem zu Grunde, einen konstruktiv einfach aufgebauten Filter zu schaffen, welcher mit geringem Aufwand gewartet werden kann. Zweckmäßig soll auch die Raumausnutzung im Filtergehäuse verbessert werden.

Dieses Problem wird erfindungsgemäß mit den Merkmalen des Anspruches 1 gelöst. Die Unteransprüche geben zweckmäßige Weiterbildungen an.

Der Gehäusedeckel sitzt beim erfindungsgemäßen Filter in einem Bereich des Filtergehäuses zwischen Anströmseite und Abströmseite des Filterelements und befindet sich außerhalb des Strömungswegs des zu reinigenden flüssigen oder gasförmigen Fluids. Der Gehäusedeckel stellt somit kein Hindernis für das zu reinigende Fluid dar, so dass der Filter in der Weise in das Leitungssystem integriert werden kann, dass die Anschlussstellen zwischen den Leitungsabschnitten für die Zufuhr bzw. Ableitung des Fluids im Bereich der Anströmseite und Abströmseite gemeinsam mit dem Filterelement einen durchgehenden, hindernisfreien Strömungsweg bilden. Unerwünschte Stauräume für das Fluid können vermieden werden. Außerdem kann der Filter in konstruktiv einfacher Weise axial in den Strömungsweg eingebaut werden.

Für Wartungszwecke reicht es aus, den Gehäusedeckel zu öffnen, wodurch der Aufnahmeraum im Filtergehäuse zugänglich gemacht wird und das verschmutzte Filterelement durch ein unverbrauchtes Filterelement ausgetauscht werden kann, ohne dass hierfür eine Demontage des Filters aus seiner Einbaulage im Leitungssystem erforderlich wäre. Die Roh- und Reinluftleitungen müssen zum Filterelementwechsel nicht entfernt werden. Wartungsarbeiten vereinfachen sich hierdurch erheblich.

Ein weiterer Vorteil ist darin zu sehen, dass insbesondere die Anschlüsse im Anströmbereich und im Abströmbereich des Filters koaxial zur Durchströmungsrichtung des Filterelementes angeordnet sind, wodurch konstruktiv aufwendige und raumgreifende Anschlussstellen entbehrlich werden und insgesamt eine kleiner bauende und kompakte Ausführung erreicht wird. In bevorzugter Ausführung werden der Aufnahmeraum einschließlich dem darin angeordneten Filterelement axial von dem zu reinigenden Medium durchströmt, wobei der Gehäusedeckel den Aufnahmeraum radial nach außen begrenzt und somit nicht unmittelbar im Strömungsweg liegt und ohne Montagearbeiten am Filter gelöst bzw. aufgesetzt werden kann. Nach dem Öffnen des Gehäusedeckels kann das Filterelement radial entnommen bzw. in den Aufnahmeraum eingesetzt werden.

Der Aufnahmeraum im Filtergehäuse kann in seinen Dimensionen genau an die Baugröße des Filterelementes angepasst werden, ohne dass dies das Einsetzen bzw. Herausnehmen des Filterelementes beeinträchtigt. Gegebenenfalls kann es aber zweckmäßig sein, Einbautoleranzen für ein erleichtertes Einsetzen bzw. Herausnehmen des Filterelementes vorzusehen. Es kann außerdem vorteilhaft sein, den Aufnahmeraum in Durchströmungsrichtung des zu reinigenden Fluids länger zu dimensionieren als das Filterelement, wobei der hierdurch entstehende axiale Spielraum auch für die Fixierung bzw. Verriegelung des Filterelements ausgenutzt werden kann.

Gemäß der Erfindung ist das Filterelement in einem separaten Trägergehäuse aufgenommen, welches ein eigenständiges, vom Filtergehäuse unabhängiges Bauteil darstellt, das in den Aufnahmeraum einzusetzen ist. Diese Ausführung bietet den Vorteil, dass zusätzlich zur Stützung und Halterung des Filterelementes auch eine Führung und Verriegelung im Aufnahmeraum mit einfachen Mitteln zu bewerkstelligen ist, indem beispielsweise Führungselemente bzw. Verriegelungselemente am Trägergehäuse des Filterelements angeordnet sind. Das Trägergehäuse ist in der Lage, sowohl in Durchströmungsrichtung als auch orthogonal hierzu ohne Beeinflussung des im Trägergehäuse aufgenommenen Filterelementes zusätzliche Kräfte aufzunehmen.

So kann insbesondere ein Führungsteil am Trägergehäuse des Filterelementes angeordnet sein, welches in eine Führungsbahn eingreift, die an einer Wandung des Aufnahmeraumes ausgebildet ist. Beim Einsetzen des Filterelementes in den Aufnahmeraum wird das Führungsteil am Trägergehäuse entlang der Führungsbahn bewegt, wobei zweckmäßig sowohl in Umfangsrichtung als auch in Achsrichtung eine Stellbewegung ausgeführt wird, um das Filterelement in seine Position im Aufnahmeraum einzuführen bzw. aus dem Aufnahmeraum herauszunehmen. Über diese zwangsgeführte Bewegung kann insbesondere ein Dichtelement zur Separierung der Anströmseite und der Abströmseite des Filterelementes in seinen Dichtsitz verstellt bzw. aus dem Dichtsitz entfernt werden, ohne dass hierfür hohe Reibungskräfte zu überwinden wären, welche einer Stellbewegung entgegenstehen würden.

Das Filterelement kann lösbar in das Trägergehäuse eingesteckt sein, insbesondere axial eingesteckt sein, so dass im Falle eines Filterelementwechsels das Trägergehäuse wiederverwendet werden kann. Es kann aber auch vorteilhaft sein, das Filterelement unlösbar mit dem Trägergehäuse zu verbinden, beispielsweise durch Kleben.

Zweckmäßig ist dem Filterelement ein Vorfilter vorgeschaltet, welcher insbesondere als Zyklonvorabscheider ausgeführt ist. Im Zyklonvorabscheider werden die abzuscheidenden Schmutzpartikel durch die Fliehkraft in einem rotierenden Luftstrom nach außen getragen und abgeschieden. Über eine Austragöffnung kann der abgeschiedene Staub aus dem Filter entfernt werden.

Weitere Vorteile und zweckmäßige Ausführungen sind den weiteren Ansprüchen, der Figurenbeschreibung und der Zeichnung zu entnehmen. Es zeigen:

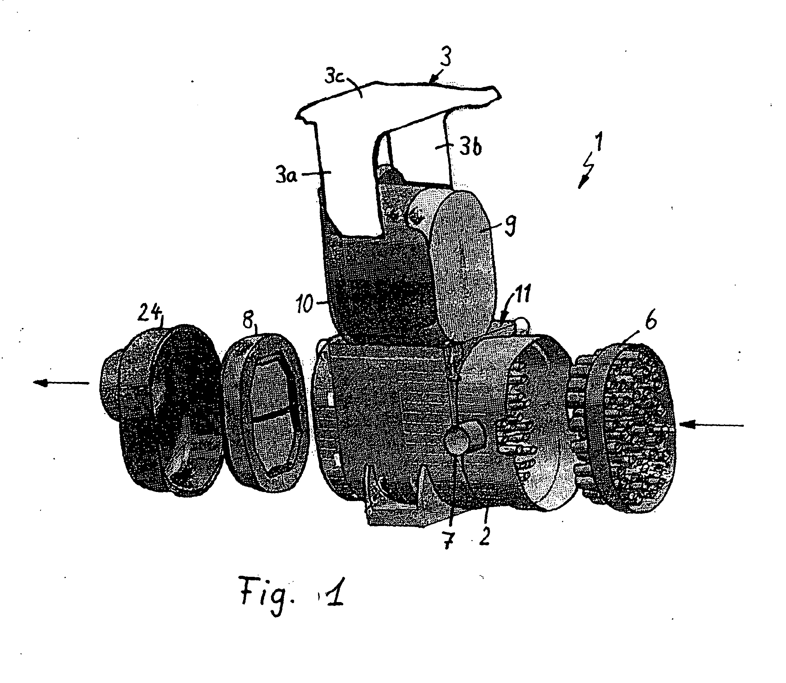

- Fig. 1: in Explosionsdarstellung einen Filter mit ovalem Filterelement mit einem, das Filterelement und das Trägergehäuse formschlüssig am Filtergehäuse arretierenden Gehäusedeckel.

Im in Fig. 1 gezeigten Ausführungsbeispiel besitzt der Filter 1 einen ovalen Querschnitt. Der Gehäusedeckel 3 besitzt jedoch eine Gestalt, die zum formschlüssigen Fixieren des Filterelementes 9 und des Trägergehäuses 10 innerhalb des Aufnahmeraumes 11 im Filtergehäuse 2 geeignet ist. Hierzu weist der Gehäusedeckel 3 zwei seitliche Deckelabschnitte 3a und 3b auf, die gemeinsam mit einer oberen Deckelplatte 3c einen Gehäusedeckel mit etwa bogenförmigem Querschnitt zum Übergreifen des Trägergehäuses 10 und des Filterelementes 9 bilden. In Montageposition sind die seitlichen Deckelabschnitte 3a und 3b in den Aufnahmeraum 11 im Filtergehäuse 2 eingesteckt und liegen zwischen der Innenwandung des Aufnahmeraumes 11 und der Mantelfläche des Trägergehäuses 10. Über zusammenwirkende Absätze auf der Mantelfläche des Trägergehäuses und am Gehäusedeckel 3 ist zusätzlich zur radialen Sicherung von Trägergehäuse 10 und Filterelement 9 innerhalb des Aufnahmeraumes 11 auch eine axiale Arretierung gegeben.

## Patentansprüche

1. Filter mit einem Filtergehäuse, mit einem in einen Aufnahmeraum (11) im Filtergehäuse (2) einsetzbaren und herausnehmbaren Filterelement (9), wobei das Filterelement (9) von einem Trägergehäuse (10) aufgenommen wird und wobei das Filtergehäuse (2) einen Gehäusedeckel (3) zum Öffnen und Verschließen des Aufnahmeraums (11) aufweist, wobei der Gehäusedeckel (3) in einem Bereich des Filtergehäuses (2) zwischen Anströmseite und Abströmseite des Filterelements (9) mit Abstand zum Strömungsweg des zu reinigenden Fluids angeordnet ist, **dadurch gekennzeichnet, dass** das Filterelement (9) mit Hilfe des Gehäusedeckels formschlüssig im Aufnahmeraum (11) gesichert ist und wobei eine axiale Arretierung des Filterelements innerhalb des Aufnahmeraums (11) gegeben ist, wobei hierfür der Gehäusedeckel (2) seitliche Deckelabschnitte (3a, 3b) aufweist die gemeinsam mit einer oberen Deckelplatte (3c) denselben mit etwa bogenförmigen Querschnitt zum Übergreifen des Trägergehäuses (10) und des Filterelements (9) bilden, wobei in Montageposition die seitlichen Deckelabschnitte (3a) und (3b) in den Aufnahmeraum (11) im Filtergehäuse (2) eingesteckt sind und zwischen der Innenwandung des Aufnahmeraums (11) und der Mantelfläche des Trägergehäuses (10) aufliegen, wobei der Filter (1), der das Filterelement aufnehmende Trägergehäuse (10) sowie das Filterelement (9) einen ovalen Querschnitt aufweist.

2. Filter nach Anspruch 1, **dadurch gekennzeichnet, dass** der Aufnahmeraum (11) und das Filterelement (9) axial von dem zu reinigenden Medium zu durchströmen sind und der Gehäusedeckel (3) den Aufnahmeraum (11) radial begrenzt.

3. Filter nach Anspruch 1 oder 2, **dadurch gekennzeichnet, dass** das Filterelement (9) in das Trägergehäuse (10) lösbar einsteckbar ist.

4. Filter nach Anspruch 1 oder 2, **dadurch gekennzeichnet, dass** das Filterelement (9) mit dem Trägergehäuse (10) verklebt ist.

5. Filter nach einem der Ansprüche 3 bis 4, **dadurch gekennzeichnet, dass** am Trägergehäuse (10) ein erstes Verriegelungselement (20) angeordnet ist, das in Einbaulage des Filterelements (9) mit einem zweiten Verriegelungselement (21) am Gehäusedeckel (3) zusammenwirkt.

6. Filter nach Anspruch 3, **dadurch gekennzeichnet, dass** die Anströmseite und die Abströmseite des Filterelements (9) im Aufnahmeraum (11) über mindestens ein Dichtelement (Dichtring 12) strömungsdicht separiert sind und das Dichtelement (Dichtring 12) am Trägergehäuse (10) gehalten ist.

7. Filter nach einem der Ansprüche 1 bis 6, **dadurch gekennzeichnet, dass** im Aufnahmeraum (11) ein dem Filterelement (9) vorgeschalteter Vorfilter (Zyklonvorabscheider 6) aufgenommen ist.

8. Filter nach Anspruch 7, **dadurch gekennzeichnet, dass** das Vorfilter als Zyklonvorabscheider (6) ausgeführt ist.

9. Filter nach einem der Ansprüche 1 bis 8, **dadurch gekennzeichnet, dass** im Aufnahmeraum (11) ein dem Filterelement (9) nachgeschalteter Feinfilter (8) aufgenommen ist.

## Claims

1. Filter having a filter housing, with a filter element (9) that is insertable into and removable from a receiving chamber (11) in the filter housing (2), wherein the filter element (9) is accommodated in a support housing (10) and wherein the filter housing (2) includes a housing cover (3) for the opening and closing of the receiving chamber (11), wherein the housing cover (3) is disposed in a region of the filter housing (2) between the incoming side and the outgoing side of the filter element (9) at a spacing from the flow path of the fluid to be filtered, **characterised in that** the filter element (9) is secured in the receiving chamber (11) in a positive locking manner with the assistance of the housing cover and wherein an axial locking of the filter element internally of the receiving chamber (11) is provided, wherein for this purpose the housing cover (2) includes lateral cover portions (3a, 3b), which together with an upper cover plate (3c) form the said housing cover with an approximately curved cross-section for engaging over the support housing (10) and the filter element (9), wherein in the assembled position the lateral cover portions (3a) and (3b) are inserted into the receiving chamber (11) in the filter housing (2) and are supported between the inner wall of the receiving chamber (11) and the outside surface of the support housing (10), wherein the filter (1), the support housing (10) that accommodates the filter element and the filter element (9) have an oval cross-section.

2. Filter according to claim 1, **characterised in that** the receiving chamber (11) and the filter element (9) are to be traversed axially by the medium to be filtered and the housing cover (3) defines the receiving chamber (11) in a radial manner.

3. Filter according to claim 1 or 2, **characterised in that** the filter element (9) is insertable into the support housing (10) in detachable manner.

4. Filter according to claim 1 or 2, **characterised in that** the filter element (9) is glued to the support housing (10).

5. Filter according to one of claims 3 to 4, **characterised in that** a first locking member (20) is disposed at the support housing (10) and the said first locking member interacts with a second locking member (21) at the housing cover (3) when the filter element (9) is installed.

6. Filter according to claim 3, **characterised in that** the incoming side and the outgoing side of the filter element (9) in the receiving chamber (11) are separated by means of at least one sealing element (sealing ring 12) so as to be fluid-tight and the sealing element (sealing ring 12) is retained at the support housing (10).

7. Filter according to one of claims 1 to 6, **characterised in that** a preliminary filter (cyclone pre-separator 6) that is connected upstream of the filter element (9) is accommodated in the receiving chamber (11).

8. Filter according to claim 7, **characterised in that** the preliminary filter is in the form of a cyclone pre-separator (6).

9. Filter according to one of claims 1 to 8, **characterised in that** a fine filter (8) that is connected downstream of the filter element (9) is accommodated in the receiving chamber (11).

## Revendications

1. Filtre avec un boîtier, comprenant un élément filtrant (9) que l'on peut introduire dans un espace de réception (11) prévu dans le boîtier (2) du filtre et l'en extraire, l'élément filtrant (9) étant reçu par un boîtier support (10) et le boîtier (2) du filtre présentant un couvercle (3) pour ouvrir et fermer l'espace de réception (11), le couvercle (3) du boîtier étant disposé dans une zone du boîtier (2) du filtre entre un côté admission et un côté évacuation de l'élément filtrant (9) à distance de la voie d'écoulement du fluide à épurer,
**caractérisé en ce que**
l'élément filtrant (9) est fixé par complémentarité de forme dans l'espace de réception (11) à l'aide du couvercle du boîtier, cet élément filtrant étant bloqué axialement à l'intérieur de l'espace de réception (11) et, à cet effet, le couvercle (2) du boîtier présente des parties latérales (3a, 3b) formées conjointement avec une plaque de couvercle supérieure (3c) avec une section en forme d'arc pour surmonter le boîtier support (10) et l'élément filtrant (9), sachant que, dans la position de montage, les parties latérales (3a) et (3b) du couvercle sont introduites dans l'espace de réception (11) prévu dans le boîtier (2) du filtre et sont placées entre la paroi intérieure de l'espace de réception (11) et la surface d'enveloppe du boîtier support (10), le filtre (1), le boîtier support (10) recevant l'élément filtrant et l'élément filtrant (9) présentant une section ovale.

2. Filtre selon la revendication 1,
**caractérisé en ce que**
l'espace de réception (11) et l'élément filtrant (9) sont prévus pour être traversés axialement par le milieu à épurer et le couvercle (3) du boîtier délimite radialement l'espace de réception (11).

3. Filtre selon la revendication 1 ou 2,
**caractérisé en ce que**
l'élément filtrant (9) peut être introduit de manière détachable dans le boîtier support (10).

4. Filtre selon la revendication 1 ou 2,
**caractérisé en ce que**
l'élément filtrant (9) est collé au boîtier support (10).

5. Filtre selon l'une des revendications 3 à 4,
**caractérisé en ce qu'**
un premier élément de verrouillage (20) disposé sur le boîtier support (10) coopère avec un deuxième élément de verrouillage (21) prévu sur le couvercle (3) du boîtier lorsque l'élément filtrant (9) est dans la position de montage.

6. Filtre selon la revendication 3,
**caractérisé en ce que**
le côté admission et le côté évacuation de l'élément filtrant (9) sont séparés de manière étanche à l'écoulement dans l'espace de réception (11) par au moins un élément d'étanchéité (bague d'étanchéité 12) et cet élément d'étanchéité (bague d'étanchéité 12) est maintenu sur le boîtier support (10).

7. Filtre selon l'une des revendications 1 à 6,
**caractérisé en ce qu'**
un préfiltre (préséparateur à cyclone 6) raccordé en amont de l'élément filtrant (9) est reçu dans l'espace de réception (11).

8. Filtre selon la revendication 7,
**caractérisé en ce que**
le préfiltre est réalisé sous la forme d'un préséparateur à cyclone 6.

9. Filtre selon l'une des revendications 1 à 8,
**caractérisé en ce qu'**
un filtre fin (8) raccordé en aval de l'élément filtrant (9) est reçu dans l'espace de réception (11).
